# EUROPEAN PATENT APPLICATION

(11) **EP 4 541 166 A1**
(43) Date of publication of application: **23.04.2025**
(21) Application number: 24205640.6
(22) Date of filing: 09.10.2024
(51) Int. Cl.: A01B 69/04, A01B 69/00

(54) **WORK VEHICLE**

(30) Priority: 19.10.2023 JP 2023180032
(71) Applicant: Yanmar Holdings Co., Ltd., Osaka-shi, Osaka (JP)
(72) Inventor: TANABE, Kazuhiro, Okayama-shi (JP); KUSUNOSE, Yoshio, Okayama-shi (JP); MORIKAWA, Yutaka, Okayama-shi (JP)
(74) Representative: Dennemeyer & Associates S.A.

(57) **Abstract**

[Problem] A work vehicle capable of easily recognizing an operation state of a device that receives correction information for correcting received positional information is provided.

[Solution] A work vehicle including a device that receives positional information in a work site includes a correction information terminal 210 that receives correction information for correcting the positional information from a base station located outside the work site, and a steering section 15 for steering the vehicle. The correction information terminal 210 displays an operation state of the correction information terminal 210 and is disposed in the steering section 15.

## Description

### TECHNICAL FIELD

The present invention relates to a work vehicle including a device that receives correction information for correcting received positional information.

### BACKGROUND ART

Work vehicles, such as combine harvesters and tractors, that receive positional information from a satellite for enabling autonomous travel have been used. Such a work vehicle may include a device (receiver) that receives correction information for correcting received positional information (refer to Patent Document 1).

The tractor disclosed in Patent Document 1 includes an antenna that receives positioning correction information from a base station (reference station) in a certain location as a device for receiving correction information for correcting positioning information as positional information of a traveling machine body which is received from the satellite. In the configuration disclosed in Patent Document 1, the antenna that receives the positioning correction information is installed in a roof of a cabin of the tractor.

### PRIOR ART DOCUMENT

### PATENT DOCUMENT

Patent Document 1: Japanese Unexamined Patent Application Publication No. 2018-200611

### SUMMARY OF INVENTION

### TECHNICAL PROBLEM

However, according to a configuration in which a receiver that receives correction information for correcting positional information is mounted on an outside of a cabin, such as a top of a roof of the cabin as illustrated in the configuration disclosed in Patent Document 1, and a configuration in which the receiver is mounted on a retracted portion of the cabin or a portion normally covered by a shielding portion, such as a lid, there arises a problem in that it is difficult for an operator who is driving the work vehicle to recognize an operation state of the receiver, such as a state of a reception of the correction information.

The present invention has been made in view of the above problem, and an object of the present invention is to provide a work vehicle capable of easily recognizing an operation state of a device that receives correction information for correcting received positional information.

### SOLUTION TO PROBLEM

A work vehicle according to the present invention includes a device that receives positional information in a work site. The work vehicle includes a correction information device that receives correction information for correcting the positional information from a base station located outside the work site, and a steering section for steering the vehicle. The correction information device displays an operation state of the correction information device and is disposed in the steering section.

The work vehicle according to another aspect of the present invention further includes a cabin that covers the steering section. The correction information device is disposed inside the cabin.

In the work vehicle according to a further aspect of the present invention, the correction information device is disposed such that display of the operation state is viewable from an outside of the cabin.

In the work vehicle according to a still further aspect of the present invention, the cabin has an open/close door for getting in and getting out the steering section, and the correction information device is disposed such that the operation state is viewable from an outside of the cabin through the open/close door in a closed state.

In the work vehicle according to a still further aspect of the present invention, a driver's seat is disposed in the steering section, and the correction information device is disposed below the driver's seat.

The work vehicle according to a still further aspect of the present invention further includes a reset operation portion for resetting a state of the correction information device. The correction information device is disposed in a driver's seat support portion that supports the driver's seat, and the reset operation portion is disposed in the driver's seat support portion.

In the work vehicle according to a still further aspect of the present invention, the reset operation portion is disposed below the correction information device.

### ADVANTAGEOUS EFFECTS OF INVENTION

According to the present invention, an operation state of a device that receives correction information for correcting received positional information can be easily recognized.

### BRIEF DESCRIPTION OF DRAWINGS

FIG. 1 is a left side view of a combine harvester according to an embodiment of the present invention.
FIG. 2 is a right side view of the combine harvester according to the embodiment of the present invention.
FIG. 3 is a plan view of the combine harvester according to the embodiment of the present invention.
FIG. 4 is a left side view of a cabin according to the embodiment of the present invention.
FIG. 5 is a right side view of the cabin according to one embodiment of the present invention.
FIG. 6 is a front view of the cabin according to the embodiment of the present invention.
FIG. 7 is a plan view of the cabin according to the embodiment of the present invention.
FIG. 8 is a left side view of an antenna unit and a support configuration thereof according to the embodiment of the present invention.
FIG. 9 is a front view of an antenna unit and a support configuration thereof according to the embodiment of the present invention.
FIG. 10 is a plan view of the support configuration of the antenna unit according to the embodiment of the present invention.
FIG. 11 is a lower perspective view of the antenna unit and the support configuration thereof according to the embodiment of the present invention.
FIG. 12 is a block diagram of a configuration of a self-steering system of a combine harvester according to the embodiment of the present invention.
FIG. 13 is a right front perspective view of an arrangement configuration of a correction information terminal according to the embodiment of the present invention.
FIG. 14 is a right side partial sectional view of the arrangement configuration of the correction information terminal according to the embodiment of the present invention.
FIG. 15 is a right front perspective view of the correction information terminal and an attachment configuration thereof according to the embodiment of the present invention.
FIG. 16 is a right side partial sectional view of the correction information terminal and an attachment configuration thereof according to the embodiment of the present invention.
FIG. 17 is a back-side sectional view of the correction information terminal and the attachment configuration thereof according to the embodiment of the present invention.
FIG. 18 is an exploded perspective view of the correction information terminal and the attachment configuration thereof according to the embodiment of the present invention.
FIG. 19 is a right front perspective view of an example of a viewing state of the correction information terminal viewed from an outside of the cabin having a cabin door according to the embodiment of the present invention.

### DESCRIPTION OF EMBODIMENTS

The present invention is made to easily recognize an operation state of a correction information device by considering an arrangement position and the like of the correction information device in a configuration having the correction information device that receives correction information for correcting received positional information. In the following, an embodiment of the present invention is described with reference to the drawings.

In the embodiment of the present invention described below, a combine harvester is taken as an example of a work vehicle according to the present invention. However, the work vehicle according to the present invention at least includes a cabin that covers a driving section. Examples of the work vehicle to which the present invention is applied include a tractor and a wheel loader for civil engineering work, in addition to various combine harvesters such as a head-feeding combine harvester and a normal combine harvester.

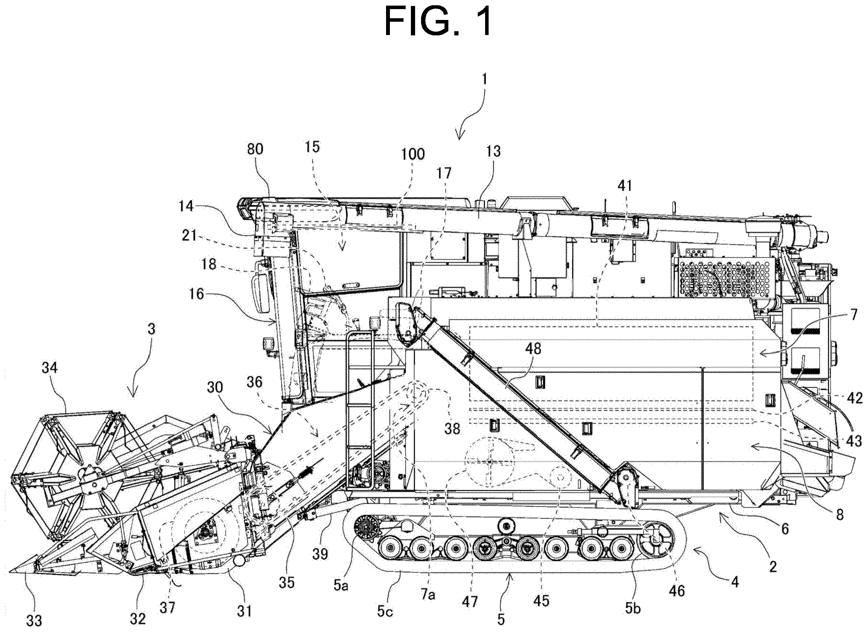

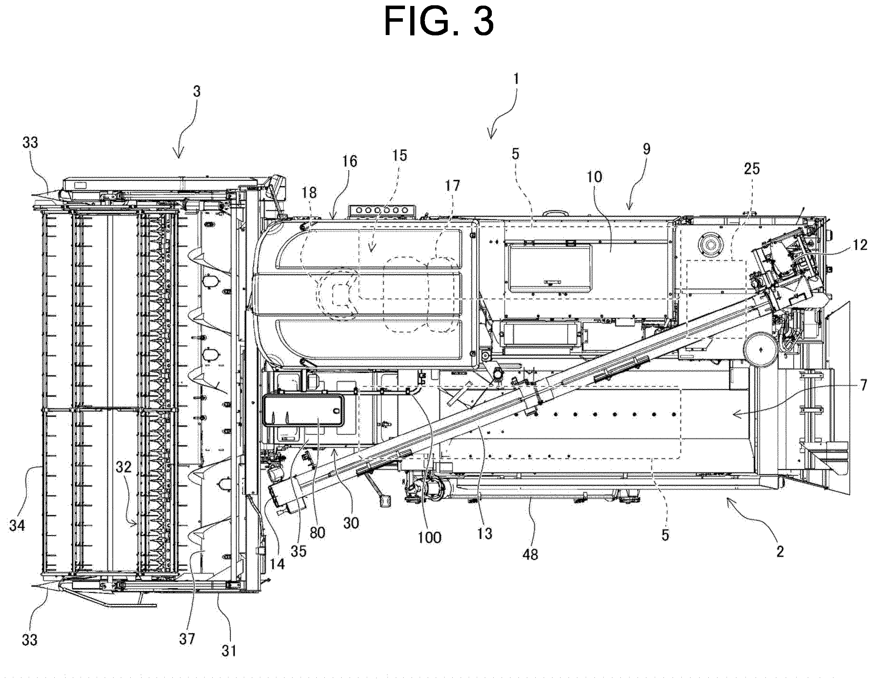

An entire configuration of a combine harvester 1 as the work vehicle according to this embodiment will be described with reference to FIGS. 1 to 3. Note that, in the following description, a left side (lower side in FIG. 3) and a right side (upper side in FIG. 3) toward a front of the combine harvester 1 are determined as a left side and a right side of the combine harvester 1, respectively.

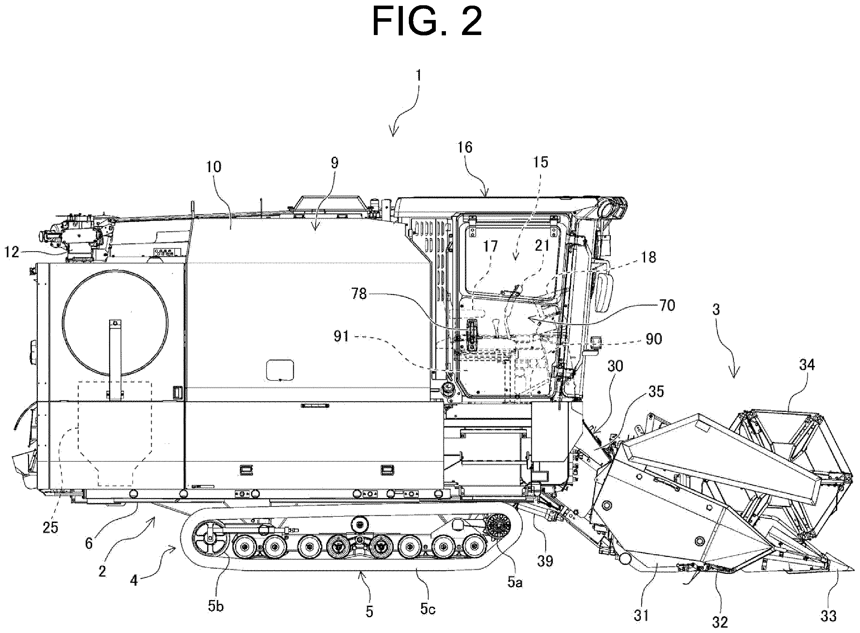

As illustrated in FIGS. 1 and 2, the combine harvester 1 according to this embodiment is an ordinary combine harvester as a harvester capable of raking reaped field crops into a machine body, threshing, sorting, storing grains, and conveying out the grains to the outside of the machine as appropriate. The combine harvester 1 includes a traveling machine body 2 capable of autonomously traveling and a reaping section 3 provided at a front end portion of the traveling machine body 2. The reaping section 3 is a reaping device configured to reap grain culm, such as rice and wheat, which has not been reaped while taking in the reaped grain culm and is attached to the traveling machine body 2 in a lifting available manner.

The traveling machine body 2 includes a traveling section 4 configured as a crawler-type traveling device having a pair of right and left crawler portions 5. A machine body frame 6 is bridged between the right and left crawler portions 5. Each of the crawler portions 5 has a plurality of rotators including a driving sprocket 5a disposed in a front end portion of the crawler portion 5 and a tension roller 5b disposed in a rear end portion of the crawler portion 5, and a cover belt 5c wound over the rotators. The driving sprocket 5a is driven to rotate after receiving transmission of power of an engine 25 serving as a driving source included in the combine harvester 1.

On a left side on a machine body frame 6, a threshing section 7 that threshes grain culm combined and supplied by the reaping section 3 and a sorting section 8 that sorts grains threshed by the threshing section 7 are disposed. The threshing section 7 and the sorting section 8 are arranged in such a manner that the threshing section 7 is an upper stage and the sorting section 8 is a lower stage.

On the machine body frame 6, a grain storage 9 having a grain tank 10 that stores grains (clean grain) sorted by the sorting section 8 is disposed on a right side of the threshing section 7 and the sorting section 8. In the grain tank 10, a lower discharge conveyor is disposed to convey the stored grain toward a discharge port of the grain tank 10. A vertical conveyor 12 is erected in an up-down direction so as to communicate with the discharge port of the grain tank 10. A grain discharge conveyor 13 serving as a discharge auger is connected to an upper end portion of the vertical conveyor 12. The grain discharge conveyor 13 is disposed in a horizontally turnable manner and a vertically rocking available manner around a horizontal axis. These conveyors convey the grains in the grain tank 10, and the grains are ejected from chaff slot 14 formed on a tip end portion of the grain discharge conveyor 13 to a loading platform of a truck, a container, or the like.

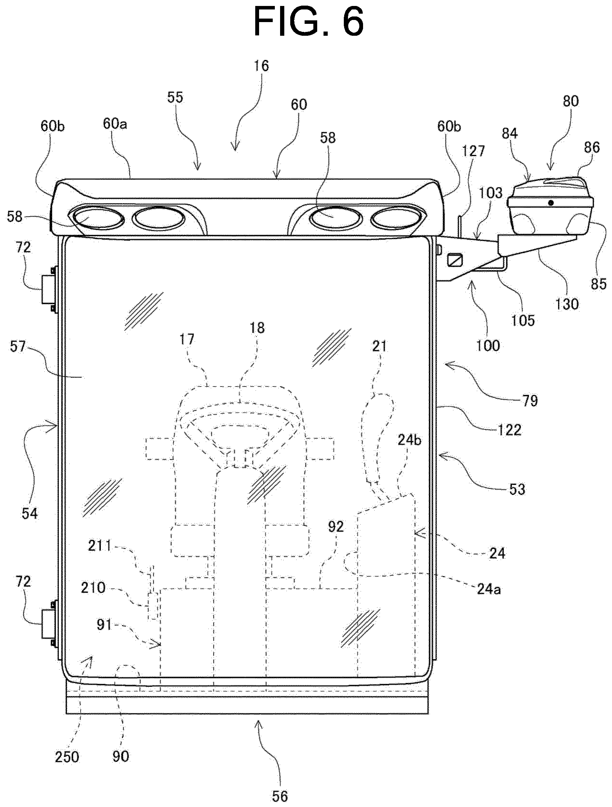

Furthermore, on the machine body frame 6, a steering section 15 which is a driving section in which an operator is on board is disposed in a position in front of the grain storage 9, that is, a position of a right front portion on the machine body frame. The steering section 15 is for steering the vehicle as the combine harvester 1, and is covered with a cabin 16. The steering section 15 has various operation tools including a driver's seat 17, a steering handle 18 disposed in front of the driver's seat 17, and a main shift lever 21. The operation tools including the main shift lever 21 are disposed on a lever column 24 disposed on a left side of the driver's seat 17 (refer to FIG. 6).

The engine 25 as a driving source is disposed in the rear of the grain storage 9 on the traveling machine body 2. The engine 25 is a diesel engine and has a diesel particulate filter (DPF) serving as a discharge gas purifying device mounted thereon.

The reaping section 3 includes a feeder 30, a grain header (platform) 31, a cutting blade device 32, a pair of right and left grass dividers 33, and a raking reel 34.

The feeder 30 is a conveying device that conveys grain culm reaped by the reaping section 3 and supplies the grain culm to the threshing section 7. The feeder 30 includes a feeder house 35 as a housing and a grain culm conveyor 36 disposed inside the feeder house 35. The feeder 30 is positioned on a left side of the cabin 16, and is disposed in a state in which a rear end opening portion of the feeder house 35 configured in a substantially rectangular tube shape with a longitudinal direction as a front-rear direction in plan view is in communication with the threshing port 7a on the front side of threshing section 7.

The grain header 31 has a horizontally long bucket shape, and communicates with a front of the feeder 30 so as to communicate with a front end opening portion of the feeder house 35. A raking auger (platform auger) 37 is disposed in the grain header 31. The raking auger 37 is suspended on a shaft so as to rotate with a rotation shaft extending in a right-left direction.

The cutting blade device 32 is disposed in a lower front edge portion of the grain header 31 and formed as electric clippers. The pair of left and right grass dividers 33 are disposed so as to protrude forward from right and left side portions on a front side of the grain header 31. The raking reel 34 has a tine bar and is disposed in an upper font position of the raking auger 37 in a state in which the raking reel 34 is supported with a rotation shaft extending in a right-left direction. The raking reel 34 continuously acts on hull attaching portions of the grain culm while rotating, and rakes the hull attaching portions of the grain culm to the raking auger 37. Power from the engine 25 transmitted through various transmission mechanisms is used for operations of the sections included in the reaping section 3.

The threshing section 7 and the sorting section 8 will now be described. The threshing section 7 includes a threshing cylinder 41 disposed in a threshing chamber having the threshing port 7a opened to a front side, and a receiving net 42 disposed below the threshing cylinder 41. The threshing cylinder 41 is supported in a rotatable manner by a threshing cylinder shaft extending in a front-rear direction. On an upper side of the threshing cylinder 41, a plurality of dust sending valves (not illustrated) for adjusting a conveying speed (retention time) of threshed material in the threshing chamber are disposed in an angle adjustable manner. The receiving net 42 is disposed along an outer peripheral surface of a lower portion of the threshing cylinder 41 to leak grains downward.

The sorting section 8 includes a rocking sorting board 43 serving as a rocking section disposed below the receiving net 42, a first conveyor 45, a second conveyor 46, and a winnower 47.

The rocking sorting board 43 has components for gravity sorting, such as a feed pan, a chaff sieve that adjusts a grain leakage amount and that is disposed on a rear side of the feed pan, and a grain sieve disposed below the chaff sieve. The first conveyor 45 is disposed in a first gutter extending in a machine body width direction so as to collect first grains. The second conveyor 46 is disposed in a second gutter extending in the machine body width direction so as to collect second grains in a rear position of the first conveyor 45. The winnower 47 sends sorting air passing from a lower front portion to an upper rear portion to the rocking sorting board 43.

Furthermore, a returning conveyor 48 is disposed on a left side of the machine body of a portion where the threshing section 7 and the sorting section 8 are disposed. The returning conveyor 48 is connected to the second conveyor 46 with a lower end portion thereof positioned in the vicinity of the second conveyor 46, and extends in a forwardly rising inclined manner with an upper end portion thereof positioned in the vicinity of a front end portion of the threshing cylinder 41. Moreover, an upper conveyor (not illustrated) extending in the right-left direction in front of the threshing cylinder 41 is disposed at an upper end portion of the returning conveyor 48.

The combine harvester 1 having the configuration described above lifts the reaping section 3 by a lifting operation of the feeder 30 with a reaping input shaft 38 as a supporting shaft to a desired height (a reaping height of grain culm which is harvested crops) and is brought into an operation state from a non-operation state so as to travel by the traveling machine body 2 in the operation state in a field. As a result, the combine harvester 1 separates the harvested crops into objects to be reaped and objects not to be reaped by the left and right grass dividers 33, and while raking in the hull attaching portion on an ear tip side of the grain culm to be reaped by the raking reel 34, the hull attaching portions of the grain culm are reaped by the cutting blade device 32.

The hull attaching portions of the grain culm reaped at the desired reaping positions are raked by the raking auger 37 which is being rotated into the grain header 31 and collected in the vicinity of an inlet of the feeder house 35 located in a center portion in a right-left direction of the grain header 31, through into the threshing port 7a through the feeder house 35 by the conveyor 36 included in the feeder house 35, and supplied to the threshing section 7.

The grain culm supplied to the threshing section 7 is threshed in a position between the threshing cylinder 41 and the receiving net 42 while being conveyed rearward by the rotating threshing cylinder 41. Threshed materials, such as grains smaller than mesh of the receiving net 42, leak down from the receiving net 42. Waste straws and the like which do not fall from the receiving net 42 are discharged to the field from a dust discharge port provided at a rear portion of the sorting section 8 by a conveying action of the threshing cylinder 41. On the other hand, grains (threshed grains) threshed in the threshing section 7 and falling from the receiving net 42 are separated into grains (first grains), such as refined grains, a mixture of grains and straws (second grains), such as grains with rachis-branches, and waste straws by a gravity sorting action of the rocking sorting board 43 and a wind sorting action of the winnower 47.

The grains (first grains) falling from the rocking sorting board 43 by the sorting performed by the sorting section 8 are conveyed to the grain tank 10 by the first conveyor 45 and a grain lifting conveyor (not illustrated) connected to the first conveyor 45. The second grains are returned to a threshing starting end side of the threshing cylinder 41 by the second conveyor 46, the returning conveyor 48 connected to the second conveyor 46, and an upper conveyor and subjected to the threshing process again. The waste straws and the like are discharged to the field from the dust discharge port provided at the rear portion of the sorting section 8.

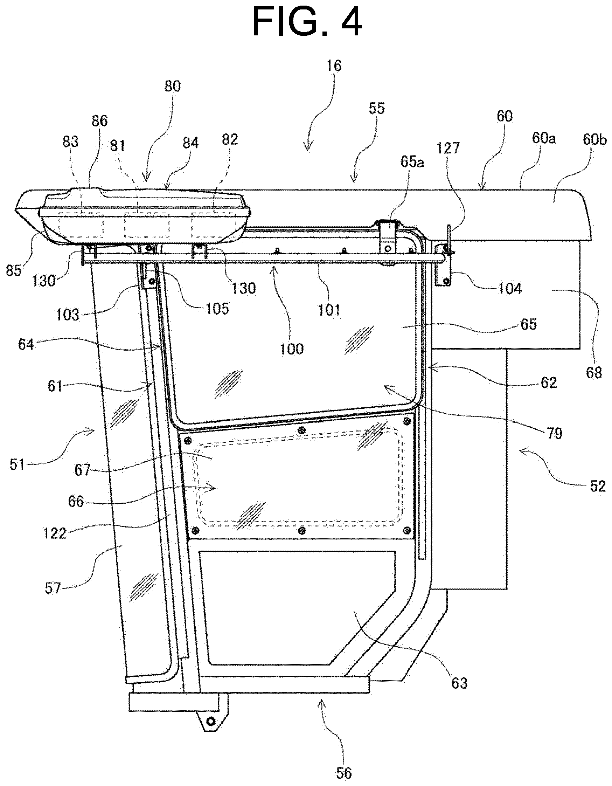

A configuration of the cabin 16 will be described with reference to FIGS. 4 to 7. The cabin 16 has a front surface portion 51, a rear surface portion 52, a left side wall portion 53, a right side wall portion 54, a roof portion 55 that forms a ceiling, and a floor portion 56, and these portions form a substantially box shape as a whole.

The front surface portion 51 of the cabin 16 is formed, as an entirely transparent window portion, from a rectangular transparent plate 57 made of glass, acrylic resin, polycarbonate resin, or the like. The front surface portion 51 is a slightly forward inclined surface portion as a whole, and has a flat surface portion at an intermediate portion in a right-left direction and curved surface portions at both right and left side portions.

In the left side wall portion 53 of the cabin 16, a left front pillar portion 61 is disposed on a front edge portion and a left rear pillar portion 62 is disposed on a rear edge portion. The left front pillar portion 61 and the left rear pillar portion 62 are disposed on the left side wall portion 53 over the approximately entire up-down direction. The left front pillar portion 61 extends along a forward inclination of the front surface portion 51 in a side view. The left rear pillar portion 62 has an upper portion extending along the up-down direction and a lower portion inclined rearward.

In the left side wall portion 53, a lower portion between the front and rear pillar portions 61 and 62 serves as a lower side surface portion 63 that is a metal plate portion composed of a steel plate or the like. An upper portion between the pillar portions 61 and 62 serves as an upper left window portion 64. The upper left window portion 64 is configured by mounting a transparent plate 65, such as rectangular glass, to a frameshaped portion including upper portions of the front and rear pillar portions 61 and 62. The transparent plate 65 is disposed so as to be openable and closable with front and rear hinge portions 65a disposed in two portions on an upper side of the upper left window portion 64. Furthermore, between the pillar portions 61 and 62, a portion between the lower side surface portion 63 and the upper left window portion 64 is configured as a lower left window portion 66 formed by a transparent plate 67, such as glass.

In the left side wall portion 53, an upper rear side plate 68 is disposed on a rear side of an upper portion of the left rear pillar portion 62. The upper rear side plate 68 forms a corner portion on an upper rear side of the left side wall portion 53. The upper rear side plate 68 has a front side edge portion extending along the left rear pillar portion 62 extending in the up-down direction.

On the right side wall portion 54 of the cabin 16, a right front pillar portion 71 is disposed at a front side edge portion, that is, a corner portion formed by the front surface portion 51 and the right side wall portion 54 of the cabin 16. The right front pillar portion 71 is symmetric or substantially bilaterally symmetric with the left front pillar portion 61 in the cabin 16, and as with the left front pillar portion 61, extends along a forward inclination of the front surface portion 51 in a side view.

The right side wall portion 54 of the cabin 16 has a door 70, which is an open/close door for getting in and out the steering section 15. The door 70 is supported in a turnable manner by a frame portion of the cabin 16 in a manner that the door 70 opens outward from the rear side. The door 70 is supported, by upper and lower hinge portions 72 disposed in two portions, in a turnable manner with the substantially up-down direction as an axis direction so as to be openable and closable from the rear side. The turn axis direction of the door 70 by the upper and lower hinge portions 72 is inclined forward in a side view along the extending direction of the right front pillar portion 71.

The door 70 includes a door main body portion 73 serving as a frame portion of the door 70. The door main body portion 73 is formed of a plate-like member having a shape formed along an outer shape of the door 70. An upper portion of the door 70 serves as an upper right window portion 74. The upper right window portion 74 is configured by mounting a transparent plate 75, such as rectangular glass, to an upper frame portion 73b forming an upper opening portion 73a having a substantially rectangular shape which is an upper portion of the door main body portion 73. The transparent plate 75 is disposed so as to be openable and closable outward from a lower side with front and rear hinge portions 75a disposed in two portions on an upper edge portion of the upper frame portion 73b.

A lower portion of the door 70 serves as a lower right window portion 76 having a transparent plate 77 made of glass, acrylic resin, polycarbonate resin, or the like. The transparent plate 77 is in a lower portion of the door main body portion 73 and is fixed to a lower frame portion 73d forming a substantially rectangular lower opening portion 73c so as to cover the lower opening portion 73c from an outside. The lower opening portion 73c is formed so as to open most of the lower portion of the door main body portion 73. A handle 78, which is gripped when the door 70 is opened and closed, is disposed at a rear portion of the lower portion of the door 70.

The roof portion 55 of the cabin 16 has a substantially rectangular outer shape with a front-rear direction as a longitudinal direction in a plan view. The roof portion 55 has an edge portion on a front side projecting forward in an eave shape with respect to an upper end portion of the front surface portion 51. A plurality of lighting portions 58 is disposed side by side on a front end surface portion of the roof portion 55.

The roof portion 55 is formed to have a flattened outer shape and be hollow. The roof portion 55 has a lower side panel (not illustrated) that forms a base portion of the roof portion 55, and a roof panel 60 which is disposed above the lower side panel and which is a cover member, and these panels form a hollow portion. The roof panel 60 has a flat upper surface portion 60a and left and right side surface portions 60b that are formed so as to bend downwardly on both the left and right sides of the upper surface portion 60a.

The left side surface portion 60b of the roof panel 60 covers an upper edge portion of the left side wall portion 53 from left, and the right side surface portion 60b of the roof panel 60 covers an upper edge portion of the right side wall portion 54 from right. An interior of the roof portion 55 has an indoor unit of an air-conditioning device and the like included in the combine harvester 1.

The floor portion 56 of the cabin 16 forms a floor surface portion 90 of a horizontal shape in a lower front portion of the driver's seat 17. On a rear side of the floor surface portion 90, a driver's seat support portion 91 forming a horizontal seat support surface 92 is disposed at a position higher than the floor surface portion 90. The driver's seat 17 is disposed on the driver's seat support portion 91.

In the cabin 16 having the above-described configuration, a left side surface portion of the cabin 16 is formed by the left side wall portion 53 and a left portion of the roof portion 55. In addition, the right side surface portion of the cabin 16 is formed by the right side wall portion 54 and a right portion of the roof portion 55. In the following, the left side surface portion including the left side wall portion 53 and the left portion of the roof portion 55 in the cabin 16 is determined as a cabin left side surface portion 79.

The combine harvester 1 according to this embodiment includes an antenna unit 80 for receiving positional information from a satellite. The antenna unit 80 is disposed in a state of being supported with respect to the cabin 16 via a predetermined support member so that the antenna unit 80 is positioned near a left portion of an upper portion of the cabin left side surface portion 79.

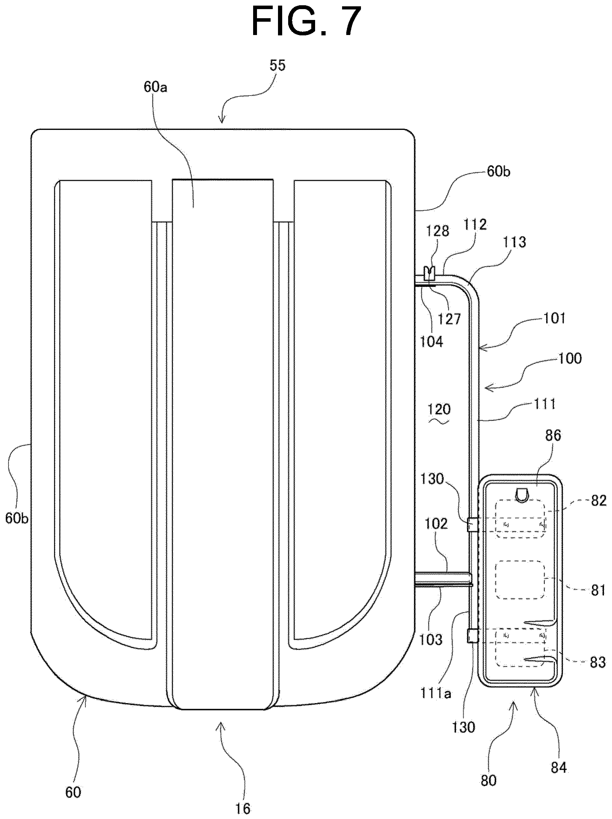

The antenna unit 80 has a box-like outer shape that is substantially rectangular in the plan view and is disposed in an orientation where a longitudinal direction thereof is the front-rear direction. The antenna unit 80 is disposed at substantially the same height as the roof portion 55 in the up-down direction. The antenna unit 80 has an approximate dimension of 1/3 of an overall length of the roof portion 55 in the front-rear direction, and is disposed at a position on a left front side with respect to the roof portion 55 (refer to FIG. 7). In the right-left direction, the antenna unit 80 is disposed so that a right side surface portion of the antenna unit 80 is positioned in the left of the left side surface portion 60b of the roof panel 60. Thus, the antenna unit 80 is disposed on a left front side of the roof portion 55 in the cabin 16.

According to this arrangement configuration of the antenna unit 80, in a configuration in which the cabin 16 is disposed in a right front portion of the machine body of the combine harvester 1, the antenna unit 80 is positioned in substantially a center portion of the entire combine harvester 1 in the right-left direction (refer to FIG. 3). In addition, since the antenna unit 80 is positioned in the left front of the roof portion 55, light distribution from the lighting portions 58 and a view from an inside of the cabin 16 are not obstructed by the antenna unit 80.

In addition, a space is formed on the left side of the cabin 16 between the grain discharge conveyor 13 in a retracted state and the cabin 16, and the antenna unit 80 is arranged in the space. The grain discharge conveyor 13 in the retracted state is turned leftward or upward of the machine body. Therefore, the antenna unit 80 does not interfere with the grain discharge conveyor 13.

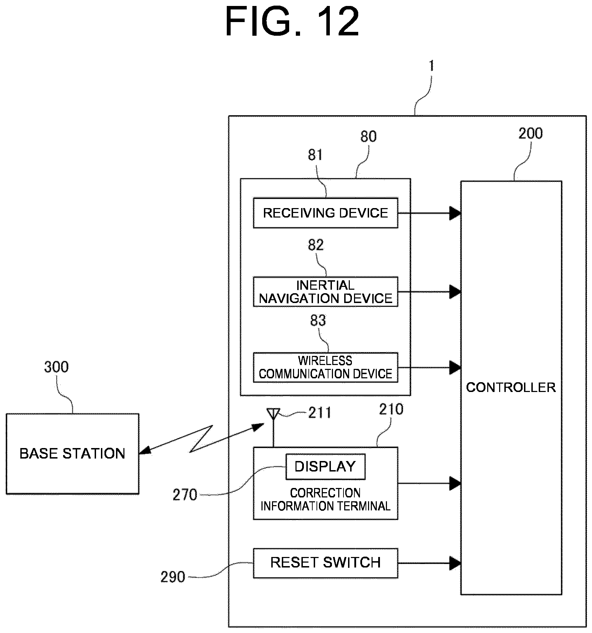

The antenna unit 80 is configured as a positioning unit for receiving radio waves from a positioning satellite and measuring a position of the combine harvester 1. The antenna unit 80 includes a receiving device 81 as a receiver, an inertial navigation device 82 as an arithmetic portion, a wireless communication device 83 as a communicator, and a case 84 that houses these devices. The antenna unit 80 constitutes an automatic steering system of the combine harvester 1 with a controller 200 included in the combine harvester 1 (refer to FIG. 12).

The receiving device 81 receives radio waves from a positioning satellite, converts the received radio waves into signals, and transmits the signals to the inertial navigation device 82. The receiving device 81 is, for example, a GNSS receiver (GNSS antenna) that receives radio waves from a group of GNSS satellites, or a Global Positioning System (GPS) receiver (GPS antenna) that receives radio waves from GPS satellites, or the like.

The inertial navigation device 82 is an inertial measuring unit (IMU) that measures triaxial gyros and acceleration in three directions to calculate posture orientation data. In addition, the inertial navigation device 82 calculates positional data based on signals transmitted from the receiving device 81. The inertial navigation device 82 functions as an arithmetic device that calculates positional data based on positional information supplied from the receiving device 81. For example, when the inertial navigation device 82 includes a GNSS receiver, reliability of the posture orientation data calculated by the inertial navigation device 82 is improved.

The antenna unit 80 including the inertial navigation device 82 makes it possible to use inertial navigation to calculate and determine a speed and a distance of a movement based on acceleration in three directions detected by the inertial navigation device 82, even in situations where radio waves from positioning satellites may not be received due to bad weather, radio wave interference, and the like.

The wireless communication device 83 transmits positional data and posture orientation data calculated by the inertial navigation device 82 to the outside via wireless communication. The wireless communication device 83 is a data communication device using, for example, wireless local area network (LAN) or mobile communication. The data transmitted from the wireless communication device 83 is received by, for example, a mobile terminal owned by an operator or an Electronic Control Unit (ECU) of the combine harvester 1, and is used to check a position of the combine harvester 1 in the field, check a posture of the combine harvester 1 (e.g., forward/rearward/right/left inclination), and so on.

The case 84 has a lower case body 85 that forms a lower portion of the case 84 and an upper case body 86 that forms an upper portion of the case 84, and these case bodies form a housing space and an outer shape of the antenna unit 80. The case 84 has a relatively flat box-like outer shape with a front-rear direction as a longitudinal direction, and the outer shape is formed by the lower case body 85 and the upper case body 86. The lower case body 85 and the upper case body 86 are members made of resin, for example.

In the case 84, from front to rear, the wireless communication device 83, the receiving device 81, and the inertial navigation device 82 are arranged in this order at predetermined intervals. These devices are included in the case 84 in a state of being fixed by fixtures, such as bolts, to an attachment plate (not illustrated) disposed on an upper side of a bottom surface portion 85a of the lower case body 85.

As described above, the antenna unit 80 is configured as an integrated unit such that the receiving device 81, the inertial navigation device 82, and the wireless communication device 83 are accommodated in the case 84.

Positioning data (positional data and posture orientation data) acquired by the antenna unit 80 is used to control the autonomous combine harvester 1, which works while traveling autonomously along a preset route. The positional data is used, for example, to determine whether the combine harvester 1 is traveling along a predetermined route. Furthermore, the posture orientation data is used to check a driving condition of the combine harvester 1 and a condition of the field, for example, by recognizing an inclination of the combine harvester 1. Moreover, when the operator receives transmitted data from the wireless communication device 83 by the mobile terminal or the like, a real-time instruction can be transmitted to the combine harvester 1.

As described above, the combine harvester 1 according to this embodiment includes the antenna unit 80 including the receiving device 81 as a device that receives positional information in the field which is a work site. Note that the configuration of the antenna unit 80 is not limited to this embodiment. As a configuration of the antenna unit 80, for example, the antenna unit 80 may be configured to have the receiving device 81 functioning as an arithmetic portion that calculates positional data using positional information received by the receiving device 81, allowing the inertial navigation device 82 to be omitted.

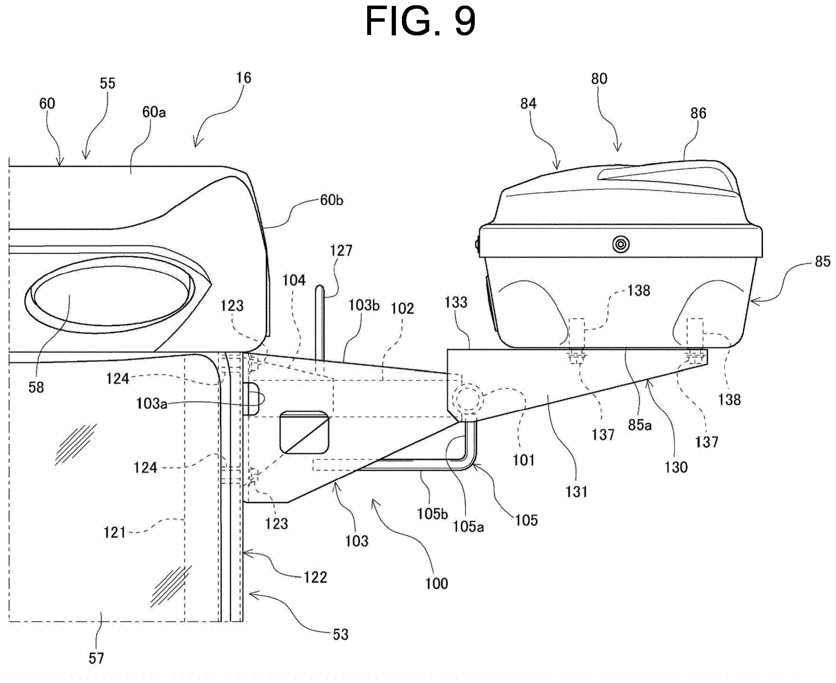

A support configuration of the antenna unit 80 will be described with reference to FIG. 4 to FIG. 11. The combine harvester 1 has a support frame 100 as an antenna support member for supporting the antenna unit 80. The support frame 100 is a frame portion having a predetermined bent or curved shape, and is disposed on the cabin left side surface portion 79.

The support frame 100 extends rearward and forward. The support frame 100 includes a main frame portion 101 forming a major portion of the support frame 100, a front arm portion 102 extending in the right-left direction, a front support bracket 103 supporting a front portion of the main frame portion 101 with respect to the cabin 16, and a rear support bracket 104 supporting a rear portion of the main frame portion 101 with respect to the cabin 16.

The main frame portion 101 is configured by a round pipe-shaped member that bent in a substantially L-shape, and is horizontally disposed so as to have the substantially L-shape in the plan view. The main frame portion 101 has, as the substantially L-shaped portion, a front-rear extending side portion 111 extending in the front-rear direction, a rear side portion 112 serving as a rear side portion of the support frame 100 with the right-left direction as an axis direction, and a curve portion 113 that forms a corner portion between the front-rear extending side portion 111 and the rear side portion 112. In the left side view, the main frame portion 101 is positioned below and near a lower edge portion of the left side surface portion 60b of the roof panel 60, and is disposed along an upper edge portion of the upper left window portion 64.

The main frame portion 101 is fixed and supported on the left side wall portion 53 of the cabin 16 at the rear side portion 112 through a rear support bracket 104. The rear support bracket 104 is fixed on a portion on an upper front side of the upper rear side plate 68 included in the left side wall portion 53, and supports the rear side portion 112 with respect to the upper rear side plate 68. The rear support bracket 104 is a bent plate-shaped member having a substantially U-shape in a plan view, and has a fixing surface portion 104a fixed on the upper rear side plate 68 and a support surface portions 104b supporting the rear side portion 112.

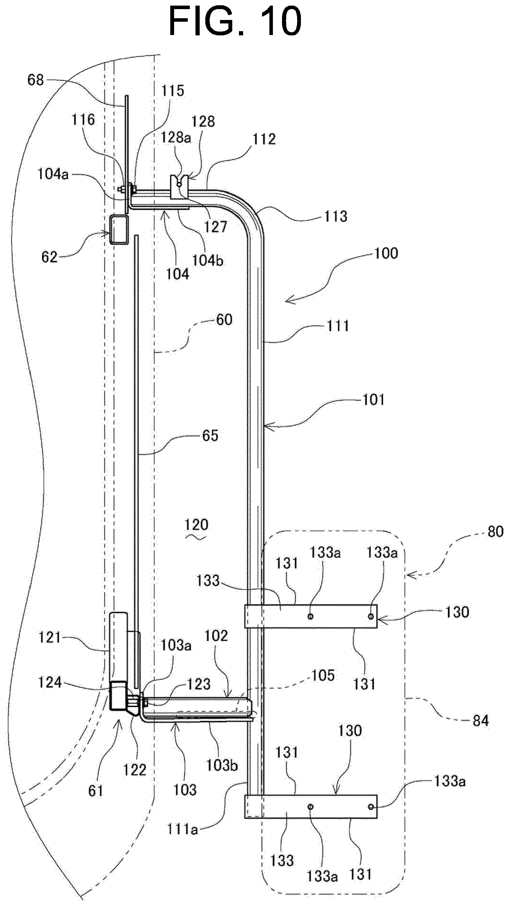

The rear support bracket 104 is fixed to the upper rear side plate 68 by bolts and nuts at two positions, that is, an upper position and a lower position, in a state in which the fixing surface portion 104a overlaps with the upper rear side plate 68 from the left. The bolts 115 penetrate the fixing surface portion 104a and the upper rear side plate 68 from the left and are inserted by screwing into the corresponding nuts 116 positioned on a right side of the upper rear side plate 68 (refer to FIG. 10).

The support surface portion 104b bends leftward from a front edge portion of the fixing surface portion 104a and forms a projecting piece portion projecting leftward from the upper rear side plate 68. The rear side portion 112 of the main frame portion 101 is fixed by welding or the like to an upper rear portion of the support surface portion 104b. The rear side portion 112 is in contact with the fixing surface portion 104a at an edge surface on a tip side (right side), and is fixed to the fixing surface portion 104a by welding or the like.

The main frame portion 101 is fixed and supported on the left side wall portion 53 of the cabin 16 at a front portion of the front-rear extending side portion 111 through the front support bracket 103. The front support bracket 103 is fixed on an upper edge portion of the left front pillar portion 61 included in the left side wall portion 53 and supports the front-rear extending side portion 111 with respect to the left front pillar portion 61.

The left front pillar portion 61 includes a pillar main body portion 121 extending along a forward inclination of the front surface portion 51 of the cabin 16 and an outer pillar portion 122 disposed on an outside (left side) of the pillar main body portion 121 (refer to FIG. 10). The pillar main body portion 121 and the outer pillar portion 122 are fixed to each other to integrally constitute the left front pillar portion 61.

The pillar main body portion 121 is constituted by a square pipe member having a rectangular vertical cross sectional shape. The outer pillar portion 122 is constituted by a groove-shaped steel member having a substantially U shaped cross section, and is fixed by welding or the like to a left side surface portion of the pillar main body portion 121.

The front support bracket 103 is a bent plate-shaped member forming a substantially L-shape in a plan view, and has a fixing surface portion 103a fixed on the outer pillar portion 122 and a support surface portion 103b supporting the front-rear extending side portion 111.

The front support bracket 103 is fixed to the outer pillar portion 122 by bolts 123 and nuts 124 at two positions, that is, an upper position and a lower position, in a state in which the fixing surface portion 103a overlaps with an upper end portion of the outer pillar portion 122 from left. The bolts 123 penetrate the fixing surface portion 103a and the outer pillar portion 122 from the left and are inserted by screwing into the corresponding nuts 124 positioned on a right side of the left side surface portion (inner portion of outer pillar portion 122).

The support surface portion 103b bends leftward from a front edge portion of the fixing surface portion 103a and forms a projecting piece portion projecting leftward from the outer pillar portion 122. The front-rear extending side portion 111 of the main frame portion 101 is fixed by welding or the like to a tip side portion of the support surface portion 103b.

The front arm portion 102 is constituted by a round pipe member extending straight, and is bridged between the front-rear extending side portion 111 of the main frame portion 101 and the fixing surface portion 103a of the front support bracket 103. The front arm portion 102 is fixed by welding or the like to a rear side of an upper portion of the support surface portion 103b. The front arm portion 102 is fixed by welding or the like to the front-rear extending side portion 111 of the main frame portion 101 at a left end portion thereof. The front arm portion 102 is in contact with the fixing surface portion 103a at a right end surface thereof, and is fixed to the fixing surface portion 103a by welding or the like.

In the support frame 100, an L-shaped reinforcement frame portion 105 is disposed between the main frame portion 101 and the front support bracket 103. The reinforcement frame portion 105 is constituted by a bending bar member that is bent in an L shape, and includes a vertical side portion 105a extending in a vertical direction and a horizontal side portion 105b extending in a horizontal direction. The reinforcement frame portion 105 is fixed by welding or the like to the main frame portion 101 at an upper end portion of the vertical side portion 105a thereof, and is fixed by welding or the like to the front support bracket 103 at a right portion of the horizontal side portion 105b thereof.

In the main frame portion 101, a front portion of the front-rear extending side portion 111 serves as a front projecting portion 111a that is projected forward from a support portion of the front support bracket 103 for the cabin 16.

The support frame 100 having the configuration described above has, in a plan view, a front side portion including the front arm portion 102 and the front support bracket 103, a rear side portion including the rear side portion 112 of the main frame portion 101, and a left side portion including the front-rear extending side portion 111 which constitute the frame portion having a frame shape along a rectangular outer shape in which the front-rear direction is a longitudinal direction and the right side is opened. In the plan view, the support frame 100 and a left edge portion of the roof panel 60 form a rectangular closed space portion 120 in which the front-rear direction is a longitudinal direction.

The antenna unit 80 is supported by the support frame 100 supportively fixed to the cabin 16 as described above. The antenna unit 80 is supported in a state in which the antenna unit 80 is fixed to support brackets 130, which are provided at two, front and rear, positions in the front-rear extending side portion 111 of the main frame portion 101 of the support frame 100.

One of the two support brackets 130 which is positioned on a front side is disposed, relative to the support frame 100, at a front end portion of the front-rear extending side portion 111, that is, a front end portion of the front projecting portion 1 1 1a. The other of the two support brackets 130 which is positioned on a rear side is disposed, in a front portion of the front-rear extending side portion 111, at a rear portion relative to a fixing portion of the front arm portion 102.

The support brackets 130 are longitudinal members in a form of a bent plate-shaped member, and are disposed at an upper side of the front-rear extending side portion 111, with the longitudinal direction as the right-left direction orthogonal to an axis direction of the front-rear extending side portion 111 in the plan view. The support brackets 130 are fixed to the front-rear extending side portion 111 at right end portions thereof and project leftward from the front-rear extending side portion 111 so as to form arm-like portions. The two support brackets 130 are arranged so as to be symmetrical or substantially symmetrical with the fixing portion of the front arm portion 102 in the front-rear extending side portion 111 as a center in the front-rear direction (refer to FIG. 10).

Each of the support brackets 130 has front and rear side surface portions 131 which are parallel to each other and a horizontal upper surface portion 133, and these surface portions form an approximately "U" shape with its lower side as an open side in the side view. The support brackets 130 are fixed by welding or the like to the front-rear extending side portion 111 at right end portions thereof. In the longitudinal direction, the support brackets 130 are smaller than the case 84 of the antenna unit 80 in a width direction (right-left direction) of the case 84 of the antenna unit 80 and longer than a half of the case 84 in the width direction. In each of the support brackets 130, the upper surface portion 133 serves as a support surface portion that receives attachment of the case 84 of the antenna unit 80.

The case 84 of the antenna unit 80 is fixed to the upper surface portions 133 of the front and rear support brackets 130 by fixing bolts 137. In each of the support brackets 130, portions fixed by the fixing bolts 137 are provided at two positions, that is, a left end portion and a right-left center portion. For this reason, in the upper surface portion 133 of the support bracket 130, hole portions 133a through which the fixing bolts 137 penetrate are formed at two positions, that is, the left end portion and the right-left center portion (refer to FIG. 10).

In the antenna unit 80, female screw portions 138 to which the fixing bolts 137 are inserted by screwing are disposed in the case 84. Each of the female screw portions 138 is constituted by a tube-like member having a screw hole, and is fixed to the case 84 such that the screw hole is opened to the bottom surface portion 85a of the lower case body 85 of the case 84. The female screw portions 138 are located in four portions corresponding to the fixing portions of the fixing bolts 137. The fixing bolts 137 penetrate through the upper surface portions 133 of the support brackets 130 from the bottom and are inserted by screwing into the female screw portions 138 so as to fix the case 84 to the support brackets 130.

As described above, the antenna unit 80 is supported by the front and rear support brackets 130 which are fixed to the main frame portion 101 of the support frame 100 and which are positioned below the front and rear portions of the antenna unit 80, respectively.

As illustrated in FIG. 12, the automatic steering system of the combine harvester 1 includes the controller 200. The controller 200 controls the portions included in the combine harvester 1 based on input signals supplied from various sensors and the like included in the combine harvester 1. The controller 200 includes a CPU (Central Processing Unit) serving as an arithmetic processing device that executes various arithmetic processing and control, a storage device, such as a random access memory (RAM) or a read only memory (ROM), an input/output device (input/output circuit), such as an input/output interface for data input/output, and peripheral circuits including a clock circuit which are connected to one another via a bus or the like. The CPU of the controller 200 performs arithmetic processing in accordance with various programs including a positioning program stored in the ROM and the like.

The controller 200 receives an input of a signal supplied from the inertial navigation device 82 and obtains posture and orientation and the like of the combine harvester 1 based on the input signal. The controller 200 also receives an input of a signal supplied from the wireless communication device 83. The controller 200 is capable of transmitting an output signal to a mobile terminal (wireless communication terminal) or the like.

As illustrated in FIG. 12, the combine harvester 1 includes a correction information terminal 210 serving as a correction information device. The correction information terminal 210 is a device that receives, from a base station 300 serving as a standard station positioned outside the field, positioning correction information which is correction information for correcting positional information (positioning information) received by the antenna unit 80. The correction information terminal 210 has an antenna 211 for receiving information supplied from the base station 300.

The combine harvester 1 functions as a mobile station based on the relationship with the base station 300 and constitutes a communication system with the base station 300. The combine harvester 1 receives positioning correction information hour to hour from the base station 300, corrects the positional information received by the antenna unit 80 based on the received positioning correction information, and obtains its positioning information with high accuracy.

The base station 300 is a fixed base station installed in a predetermined reference position outside the field. The base station 300 is, for example, a base station originally installed by a telecommunication carrier or a base station installed by a municipality or the like. The base station 300 calculates, at predetermined time intervals, a difference between its own positioning information calculated based on GNSS satellite signals received from, for example, a plurality of GNSS satellites (positioning satellites) and its own positional information recognized in advance, and transmits information on the difference as positioning correction information. The base station 300 includes an antenna for receiving a satellite signal for calculating its own positioning information, and a wireless communication device for transmitting and receiving various signals to and from the antenna 211 of the correction information terminal 210 of the combine harvester 1.

The base station 300 consecutively generates positioning correction information at a preset cycle, for example, and transmits a signal including the generated positioning correction information to the correction information terminal 210 of the combine harvester 1 using the wireless communication device. The correction information terminal 210 processes the signal including the positioning correction information received by the antenna 211 so as to acquire the positioning correction information. The positioning correction information acquired by the correction information terminal 210 is used for correction of the positioning information acquired by the antenna unit 80.

In the combine harvester 1, the controller 200 corrects the positioning information acquired by the antenna unit 80 using the positioning correction information transmitted from the base station 300 so as to calculate and acquire current positional information of the combine harvester 1. The controller 200 acquires latitude information and longitude information, for example, as the current positional information of the traveling machine body 2 of the combine harvester 1.

In this way, since the correction information terminal 210 corrects the positioning information using the positioning correction information supplied from the base station 300, a position of the traveling machine body 2 may be acquired with high accuracy. The positioning information corrected by the positioning correction information is used for the autonomous traveling of the combine harvester 1.

As described above, the combine harvester 1 includes the antenna unit 80 and the correction information terminal 210, and with this configuration, the antenna unit 80 is disposed on the left front side relative to the upper portion of the cabin 16. On the other hand, the correction information terminal 210 is installed in the steering section 15.

In the steering section 15, a portion for installing the correction information terminal 210 includes, for example, the driver's seat support portion 91 for supporting the driver's seat 17, the lever column 24 including the various operation portions, such as the main shift lever 21, installed therein, and the handle column 26 which includes the steering handle 18 on an upper end side thereof and which is erected in a right-left center portion of the front portion of the floor portion 56. The correction information terminal 210 is installed at a predetermined portion of the steering section 15 by a predetermined attachment structure, a holding structure such as a holder, or the like.

In this embodiment, the combine harvester 1 includes the cabin 16 that covers the steering section 15. Therefore, the correction information terminal 210 is installed in a predetermined position in the cabin 16.

The correction information terminal 210 may be installed in a predetermined portion inside the cabin 16 (on the side of the steering section 15) in the steering section 15 in the cabin 16. When the correction information terminal 210 is installed inside the cabin 16, the correction information terminal 210 is installed in a predetermined portion inside one of the front surface portion 51, the rear surface portion 52, the left side wall portion 53, the right side wall portion 54, the roof portion 55, and the floor portion 56 which constitute the cabin 16.

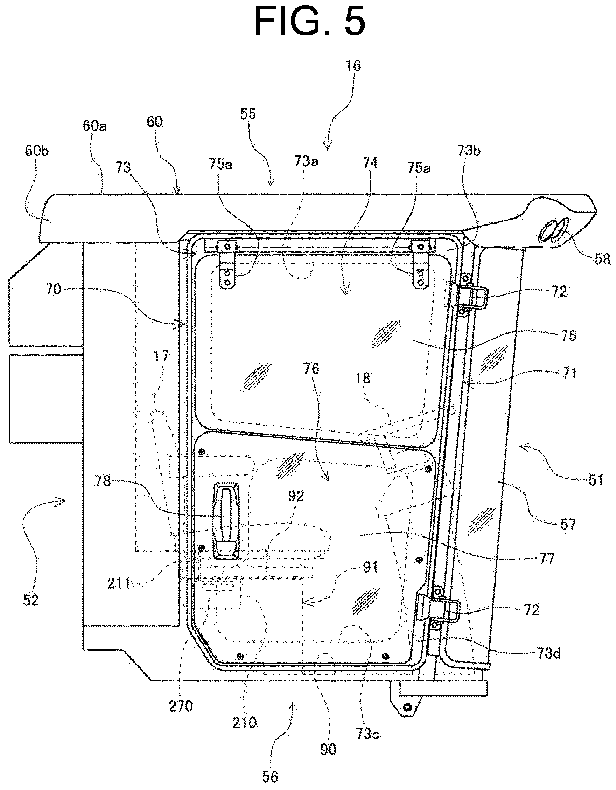

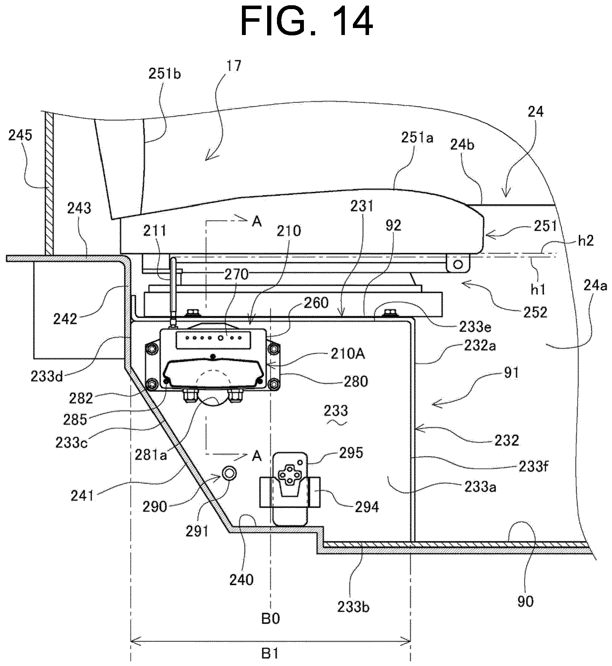

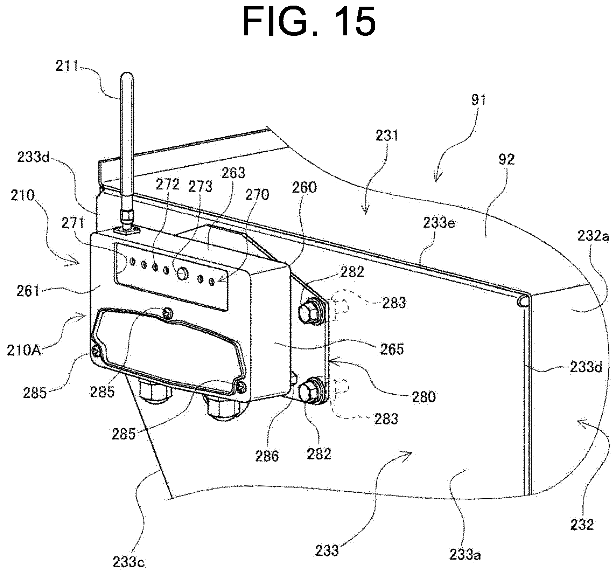

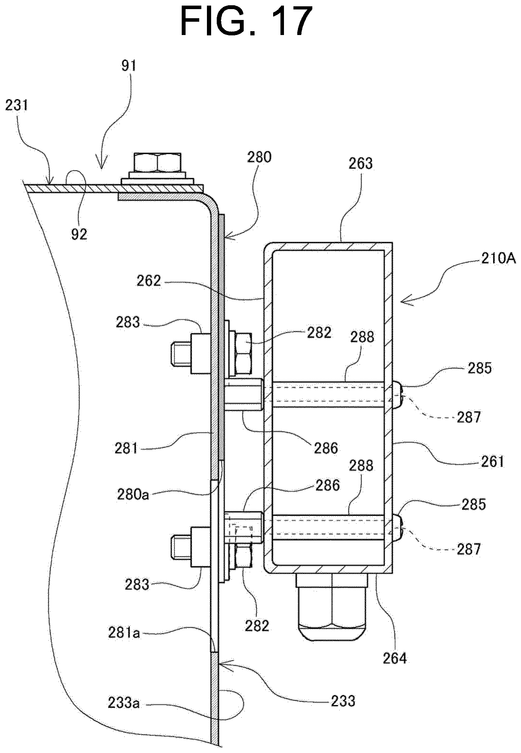

The correction information terminal 210 according to this embodiment, an arrangement configuration of the correction information terminal 210, and an attachment configuration of the correction information terminal 210 will be described with reference to FIGS. 5, 6, 13 to 19. Note that FIG. 17 is a cross sectional view (rear surface cross sectional view) taken along a line A-A in FIG. 14. Furthermore, in the cross sectional view of FIG. 17, an internal structure of the correction information terminal 210 is omitted.

The driver's seat 17 is disposed in the steering section 15 in the cabin 16, and the correction information terminal 210 is disposed below the driver's seat 17. As described above, the driver's seat support portion 91 is disposed on a rear side of the floor surface portion 90 in the steering section 15 in the cabin 16, and the driver's seat 17 is disposed on the seat support surface 92 of the driver's seat support portion 91. With this configuration, the correction information terminal 210 is disposed in a position lower than the driver's seat 17.

The correction information terminal 210 is disposed in the driver's seat support portion 91 supporting the driver's seat 17. The driver's seat support portion 91 includes an upper surface portion 231 forming the seat support surface 92, a front surface portion 232 forming a front surface 232a which is a vertical surface facing forward, and a right side surface portion 233 forming a right side surface 233a which is a vertical surface facing rightward. The front surface portion 232 and the right side surface portion 233 of the driver's seat support portion 91 are provided as vertical surface portions relative to the floor surface portion 90.

The upper surface portion 231, the front surface portion 232, and the right side surface portion 233 of the driver's seat support portion 91 have a plate-like shape constituted by plate-like members serving as support members of the driver's seat 17. Specifically, the upper surface portion 231 is a plate-like portion with the up-down direction as a plate thickness direction, and the front surface portion 232 is a plate-like portion with the front-rear direction as a plate thickness direction, and the right side surface portion 233 is a plate-like portion with the right-left direction as a plate thickness direction.

The front surface portion 232 of the driver's seat support portion 91 is erected from a rear side of the floor surface portion 90 such that a right angle is formed with the floor surface portion 90. The upper surface portion 231 of the driver's seat support portion 91 makes a right angle, with the front surface portion 232, rearward from an upper edge portion of the front surface portion 232. The right side surface portion 233 also makes a right angle rearward with the upper surface portion 231 and the front surface portion 232.

The upper surface portion 231 and the front surface portion 232 of the driver's seat support portion 91 are connected to the right side surface portion 24a of the lever column 24 at left side edge ends thereof. An upper surface portion of the lever column 24 is an operation surface portion 24b on which various operation tools, such as the main shift lever 21 (refer to FIG. 6), are disposed, and the right side surface portion 24a which is a surface portion perpendicular to the floor surface portion 90 is disposed between a right side edge portion of the operation surface portion 24b and the floor surface portion 90.

In the cabin 16, as surface portions forming an interior space of the cabin 16, a horizontal surface portion 240 formed in a stepped shape on a rear side of the floor surface portion 90, an inclined surface portion 241 which is raised rearward and which is formed on a rear side of the horizontal surface portion 240, a vertical surface portion 242 continuously formed on an upper side of the inclined surface portion 241, and a back wall portion 245 which is disposed on an upper side of the vertical surface portion 242 and which is positioned rearward relative to the vertical surface portion 242 are provided.

The horizontal surface portion 240 forms a horizontal surface which is slightly higher than the floor surface portion 90. An inclination angle of the inclined surface portion 241 with respect to the horizontal surface in the side view is, for example, approximately 60 degrees. The back wall portion 245 is disposed on the support surface portion 243 which is formed to be bent in a horizontal shape toward the rear side from an upper edge of the vertical surface portion 242.

The driver's seat support portion 91 is disposed on a right side of the right side surface portion 24a of the lever column 24 and on a front side of the inclined surface portion 241 and the vertical surface portion 242. The driver's seat support portion 91 causes the seat support surface 92 to be positioned within a range in which the vertical surface portion 242 is formed in the up-down direction. Therefore, the driver's seat support portion 91 connects an edge on the rear side of the upper surface portion 231 forming the seat support surface 92 to the vertical surface portion 242.

The right side surface portion 233 of the driver's seat support portion 91 has a shape, in the side view, along a bent shape formed by the floor surface portion 90, the horizontal surface portion 240, the inclined surface portion 241, and the vertical surface portion 242, and has edge portions on a lower side and a rear side formed along these surface portions. Therefore, the right side surface portion 233 has a lower edge portion 233b having a stepped shape along the horizontal surface portion 240 and the floor surface portion 90, an inclined edge portion 233c inclined upward toward the rear along the inclined surface portion 241, and a vertical rear edge portion 233d formed along the vertical surface portion 242. The rear edge portion 233d is formed in an upper end portion of the right side surface portion 233 in the up-down direction. Furthermore, the right side surface portion 233 has an upper edge portion 233e formed along the upper surface portion 231 and a front edge portion 233f formed along the front surface portion 232.

In the cabin 16, a space 250 used for getting on and off the driver's seat 17 through the door 70 is ensured on a right side of the driver's seat support portion 91. That is, the driver's seat support portion 91 is disposed such that the right side surface portion 233 is spaced away from the right side wall portion 54 leftward so that the space 250 is formed on a front side of the inclined surface portion 241 and the vertical surface portion 242 and between the right side surface portion 233 of the driver's seat support portion 91 and the right side wall portion 54 of the cabin 16.

The driver's seat 17 disposed on the driver's seat support portion 91 has a seat main body 251 including a seat portion 251a and a backrest portion 251b and a seat support mechanism portion 252, on the seat support surface 92, that supports the seat main body 251. For example, the seat support mechanism portion 252 supports the seat main body 251 in a movable manner in the front-rear direction or the like. A back wall portion 245 forming a rear surface portion in the room of the cabin 16 is positioned immediately behind the backrest portion 251b.

With this configuration, the correction information terminal 210 is attached to the right side surface portion 233 of the driver's seat support portion 91. The correction information terminal 210 has a device main body 210A having a substantially cuboid outer shape and the antenna 211. The correction information terminal 210 is disposed in a state in which the device main body 210A is fixed in an upper portion of the right side surface portion 233 of the driver's seat support portion 91.

The correction information terminal 210 has a housing 260 serving as a cuboid outer shape of the device main body 210A as an exterior member. The housing 260 includes a front surface portion 261, a back surface portion 262, an upper surface portion 263, a lower surface portion 264, and side surface portions 265 on opposite sides. The correction information terminal 210 is attached to the right side surface portion 233 of the driver's seat support portion 91 in a state in which the front surface portion 261 of the housing 260 faces rightward. Therefore, the side surface portions 265 on the opposite sides of the housing 260 face forward and backward.

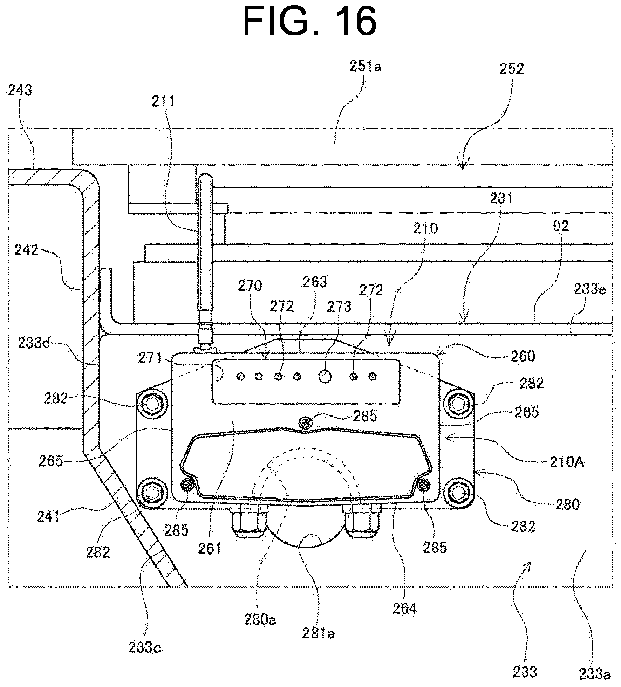

The device main body 210A has a substantially rectangular thick plate shape as an outer shape formed such that a right-left direction (right-left direction in FIG. 16 and front-rear direction of machine body) of the correction information terminal 210 is a longitudinal direction of the device main body 210A, and in addition, a front-rear direction (right-left direction in FIG. 17 and right-left direction of machine body) is a thickness direction. Hereinafter, the front-rear direction and the right-left direction of the machine body of the combine harvester 1 correspond to the front-rear direction and the right-left direction of the correction information terminal 210 attached to the right side surface portion 233 of the driver's seat support portion 91.

In the correction information terminal 210, the antenna 211 is disposed to stand in a position in the vicinity of a rear end portion of the upper surface portion 263 of the housing 260. The antenna 211 is formed of a linear rod-shaped member and extends vertically upward with respect to the upper surface portion 263.

As illustrated in FIG. 14, the correction information terminal 210 is disposed such that the entire device main body 210A is positioned on a lower side relative to the seat support surface 92 of the driver's seat support portion 91. Therefore, the correction information terminal 210 is disposed in a state in which the device main body 210A is positioned on a lower side of the driver's seat 17 in the up-down direction.

Furthermore, the correction information terminal 210 is disposed in a state in which the upper surface portion 263 of the housing 260 is positioned in the vicinity (directly below) the seat support surface 92 in the up-down direction. Therefore, the antenna 211 projecting upward from the upper surface portion 263 of the housing 260 projects upward from the seat support surface 92 in the up-down direction.

On the other hand, in the correction information terminal 210, an upper end of the antenna 211 is positioned below the seat portion 251a of the seat main body 251 of the driver's seat 17 in the up-down direction. That is, as illustrated in FIG. 14, a height position h1 of the upper end of the antenna 211 is positioned below a height position h2 of a lower surface of the seat portion 251a of the seat main body 251. Therefore, the correction information terminal 210 is disposed such that the entire correction information terminal 210 including the device main body 210A and the antenna 211 is positioned below the seat main body 251 in the up-down direction.

Furthermore, the correction information terminal 210 is disposed in a rear portion of the right side surface portion 233 of the driver's seat support portion 91 in the front-rear direction. Specifically, as illustrated in FIG. 14, the correction information terminal 210 is disposed such that the entire correction information terminal 210 is positioned on the rear side relative to a center position B0 of the right side surface portion 233. That is, the correction information terminal 210 is disposed such that the front side surface portion 265 serving as a front end surface is positioned on the rear side relative to the center position B0. Note that the center position B0 of the right side surface portion 233 is a center position in a range B1 from a front edge of the right side surface portion 233 to the rear edge portion 233d in the front-rear direction.

As described above, the correction information terminal 210 is disposed such that the entire device main body 210A is positioned within a range of an outer shape of the right side surface portion 233 of the driver's seat support portion 91 and the device main body 210A is positioned at a corner portion on an upper rear side (upper left side in FIG. 14) of the right side surface portion 233. In the correction information terminal 210, in the front-rear direction, the side surface portion 265 on the rear side of the device main body 210A is positioned on a front side relative to the rear edge portion 233d of the right side surface portion 233 of the driver's seat support portion 91, and the upper surface portion 263 of the device main body 210A is positioned below the edge portion 233e on an upper side relative to the right side surface portion 233 so that the entire device main body 210A overlaps with the right side surface portion 233 in a right side view.

With the arrangement form of the correction information terminal 210 described above, the correction information terminal 210 is disposed below the driver's seat 17 in the up-down direction. Note that the correction information terminal 210 may be disposed below the driver's seat 17 in the steering section 15 in the cabin 16, for example, at the front surface portion 232 of the driver's seat support portion 91, the inclined surface portion 241 located on the right side of the driver's seat support portion 91, or a portion of the right side surface portion 24a of the lever column 24 that is lower than the driver's seat 17.

The correction information terminal 210 displays an operation state of the correction information terminal 210. The correction information terminal 210 has a display 270 which displays an operation state of the correction information terminal 210. The display 270 displays various operation states of the correction information terminal 210. The operation states of the correction information terminal 210 displayed in the display 270 include, for example, a power on/off state of the correction information terminal 210, a reception/transmission state (connection state) of information from the base station 300 by the antenna 211, a network connection state, and a state in which a malfunction occurs in an operation.

The display 270 is disposed on an upper portion of the front surface portion 261 of the housing 260 in the device main body 210A. The display 270 has a configuration in which a plurality of light emitter 272 are arranged in a horizontally long rectangular recessed portion 271 formed in the front surface portion 261 of the housing 260. The light emitters 272 emit light to an outside of the housing 260 by a light source, such as a light emitting diode (LED), disposed in the housing 260.

The display 270 displays various operation states of the correction information terminal 210 by light emitting modes of the plurality of light emitters 272. In this embodiment, the display 270 includes six light emitters 272 arranged in a horizontal line at a predetermined interval. Each of the light emitters 272 is configured as a circle light emitting portion. In the display 270, an operation button 273 having a predetermined function for the correction information terminal 210 is disposed between a group of the two light emitters 272 on the front side and a group of the four light emitters 272 on the rear side. The operation button 273 is a circular button that is relatively large with respect to the light emitters 272. Note that the number of light emitters 272, an arrangement form of the plurality of light emitters, and the like are not limited.

The individual light emitters 272 are capable of emitting light in a plurality of light emission colors including green, red, blue, and yellow, for example. With this configuration, the display 270 displays various operation states of the correction information terminal 210 by a turn-off state, a turn-on state, a blinking state, and light emission colors in a lighting state of the individual light emitters 272.

The display 270 displays a turn-on state or a turn-off state of power of the correction information terminal 210 by turning on or off one of the light emitters 272 positioned on the rearmost side, for example. Furthermore, the display 270 displays a reception/transmission state of information from the base station 300 by the antenna 211 by the number of lighting light emitters 272 and change in light emission colors of the individual light emitters 272, for example. Note that a configuration of the display 270 is not particularly limited. The display 270 may be, for example, a liquid crystal display unit configured to perform liquid crystal display.

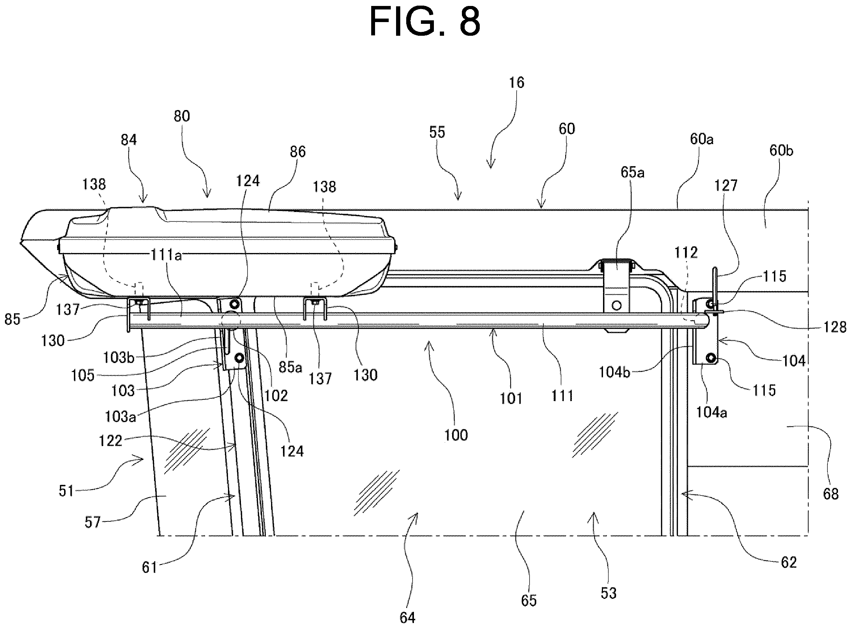

Furthermore, in the correction information terminal 210, as an antenna that receives positioning correction information from the base station 300, instead of the antenna 211, an external antenna 127 (refer to FIG. 8) may be installed outside the cabin 16. The external antenna 127 is installed via an antenna cable (not illustrated) extending from the device main body 210A. That is, the device main body 210A and the external antenna 127 are connected to each other through an antenna cable. In this embodiment, the external antenna 127 is supported at the main frame portion 101 of the support frame 100 through a support stay 128.

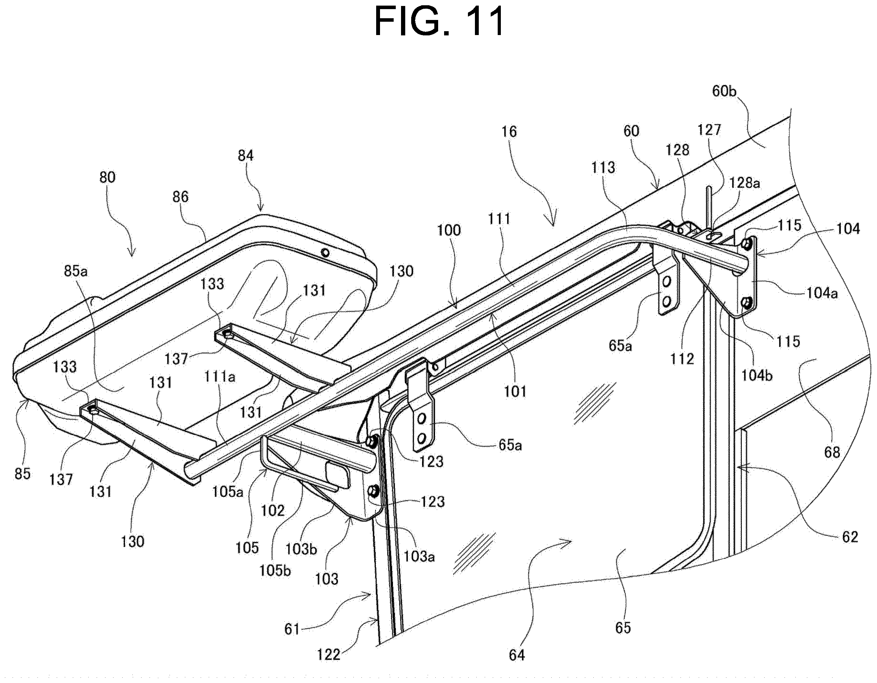

As illustrated in FIGS. 10 and 11, the external antenna 127 is supported at the rear side portion 112 of the main frame portion 101 via the support stay 128. The support stay 128 is fixed, by welding or the like, to the rear side portion 112 so that a plate-shaped member projects rearward in a horizontal direction at a right-left intermediate portion of the rear side portion 112.

A support recessed portion 128a of a notch shape with a left side thereof opened is formed in a rear portion of the support stay 128. The support stay 128 serves as a mounting seat for the external antenna 127, and supports the external antenna 127 in an upright state in a state in which a lower end portion of the external antenna 127 is fitted to the support recessed portion 128a. Note that the external antenna 127 is fixed to the support stay 128 by a fastening screw. A height of the external antenna 127 is not limited, but in this embodiment, a tip end (upper end) of the external antenna 127 is positioned below the upper surface portion 60a of the roof panel 60.

The attachment structure of the correction information terminal 210 relative to the right side surface portion 233 of the driver's seat support portion 91 will now be described. The correction information terminal 210 is disposed, to the right side surface portion 233, in a state in which the device main body 210A is fixed through an attachment plate 280 to the right side surface portion 233 of the driver's seat support portion 91.

In an inside of the driver's seat support portion 91 is an empty space portion formed by the plate members and the like that constitute the upper surface portion 231, the front surface portion 232, and the right side surface portion 233 of the driver's seat support portion 91. That is, the driver's seat support portion 91 forms an empty space portion by the upper surface portion 231, the front surface portion 232, and the right side surface portion 233 on a right side of the right side surface portion 24a of the lever column 24 and in front of the inclined surface portion 241 and the vertical surface portion 242 on the floor surface portion 90.

The attachment plate 280 is fastened and fixed by fixing bolts 282 to a right side plate 281 (refer to FIG. 17) that is a plate member (horizontal plate) forming the right side surface portion 233 of the driver's seat support portion 91. The attachment plate 280 is a flat plate member having a substantially rectangular outer shape with the front-rear direction (right-left direction in FIG. 16) as a longitudinal direction. In detail, the attachment plate 280 has a substantially pentagonal outer shape in which an upper side of a rectangular shape is a mountain shape, and includes, as side portions forming such an outer shape, a lower side portion, side portions on opposite sides in the longitudinal direction, front and rear oblique side portions forming the mountain shape on the upper side, and an upper side portion at a center in the front-rear direction.

The attachment plate 280 is longer in the longitudinal direction than the housing 260 of the device main body 210A, and the opposite sides in the longitudinal direction of the attachment plate 280 project from the housing 260 in a right side view (refer to FIG. 16). The attachment plate 280 has substantially the same size as the housing 260 in the up-down direction. The attachment plate 280 allow the fixing bolts 282 to penetrate through upper and lower corner portions on the opposite sides in the longitudinal direction, which are the portions protruding from the housing 260. The fixing bolts 282 penetrate the attachment plate 280 and the right side plate 281 and are screwed into nut portions 283 disposed inside (on a back side of) the right side plate 281. The nut portions 283 are provided by fixing, by welding or the like, nut members to a back surface of the right side plate 281, for example. In this way, the attachment plate 280 is fixed to the right side surface portion 233 (right side plate 281) of the driver's seat support portion 91 at four portions by the fixing bolts 282 that penetrate the four corners of the attachment plate 280.

The device main body 210A is fastened and fixed to the attachment plate 280 by fixing bolts 285. The fixing bolts 285 penetrate the device main body 210A from right to left and are inserted by screwing into female screw portions 286 disposed on the attachment plate 280. The female screw portions 286 are provided by fixing, by welding or the like, nut members, such as long nuts, to a main body portion of the attachment plate 280.

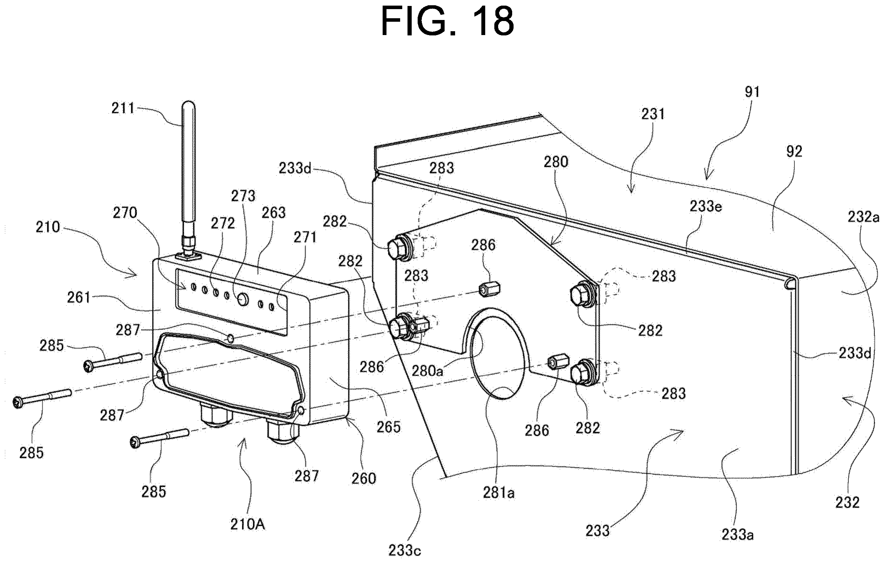

Fixing portions of the female screw portions are disposed at three portions, that is, a substantially center portion of the front surface portion 261, a lower front corner portion, and a lower rear corner portion in the device main body 210A (refer to FIG. 16). In the device main body 210A, fixing hole portions 287 that penetrate in the right-left direction are formed in portions where the female screw portions 286 penetrate (refer to FIG. 18). In the housing 260, tubular boss portions 288 that allow the female screw portions 286 to penetrate are disposed as portions forming the fixing hole portions 287 (refer to FIG. 17). In this way, the device main body 210A is fixed to the attachment plate 280 by the fixing bolts 285 at the three portions.

A cable (not illustrated) extending from the device main body 210A is disposed in the internal space of the driver's seat support portion 91 through the right side plate 281 and extends from the driver's seat support portion 91 to a predetermined connection destination. Therefore, a circle opening portion 281a that allows the cable extending from the device main body 210A to pass is formed in the right side plate 281. The opening portion 281a is a through hole portion that opens the internal space of the driver's seat support portion 91 to the outside.

The opening portion 281a is formed such that a lower half portion thereof projects from the housing 260 in the right side view (refer to FIG. 16). On a lower side of the attachment plate 280, a semicircular recessed portion 280a is formed along an outer shape of an upper portion of the opening portion 281a as a portion having a shape for avoiding interference with the opening portion 281a. In the driver's seat support portion 91, various devices including a relay and a connector connected to the cable extending from the device main body 210A are disposed.

The correction information terminal 210 installed in the cabin 16 as described above is capable of viewing display of an operation state by the display 270 from an outside of the cabin 16.

The cabin 16 has the transparent portions constituted by transparent plates, such as glass, in the front surface portion 51, the left side wall portion 53, and the right side wall portion 54, and the inside of the cabin 16 can be seen from the outside through the transparent portions. With this configuration, the correction information terminal 210 is disposed such that the display 270 is positioned in a range viewable through the transparent portions from the outside of the cabin 16. The transparent portions of the cabin 16 include the front surface portion 51, the upper left window portion 64 and the lower left window portion 66 that constitute the left side wall portion 53, and the upper right window portion 74 and the lower right window portion 76 that constitute the right side wall portion 54.

It is assumed, as an arrangement example of the correction information terminal 210, that the correction information terminal 210 is disposed on the front surface portion 232 of the driver's seat support portion 91 such that the display 270 faces forward. With this configuration, the display 270 can be viewed from the outside of the cabin 16 through the front surface portion 51 configured as an entirely transparent window portion in the cabin 16, the lower left window portion 66 included in the left side wall portion 53 of the cabin 16, the lower right window portion 76 included in the right side wall portion 54 of the cabin 16.

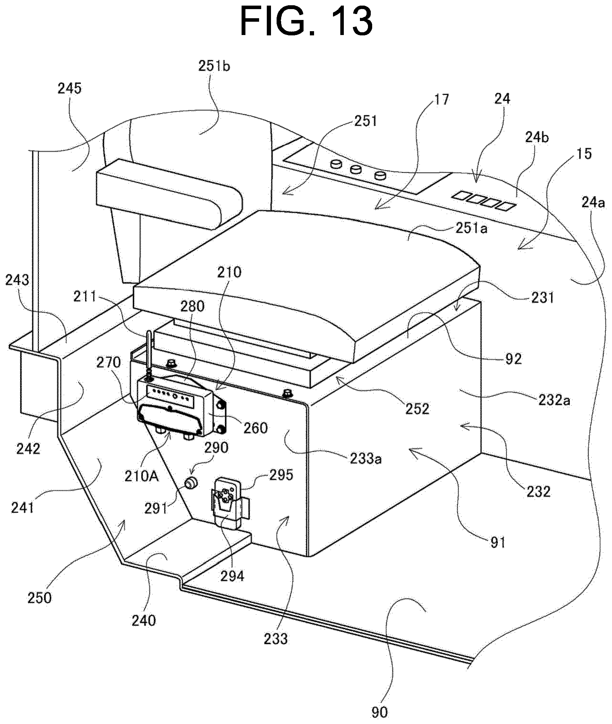

In this embodiment, as illustrated in FIG. 13 and so on, the correction information terminal 210 is attached to the right side surface portion 233 of the driver's seat support portion 91 and disposed in a state in which the display 270 faces right. In the arrangement configuration of the correction information terminal 210, the display 270 can be seen from the outside of the cabin 16, mainly in a viewpoint from the right side of the cabin 16, through the lower right window portion 76 of the right side wall portion 54 or the front surface portion 51.

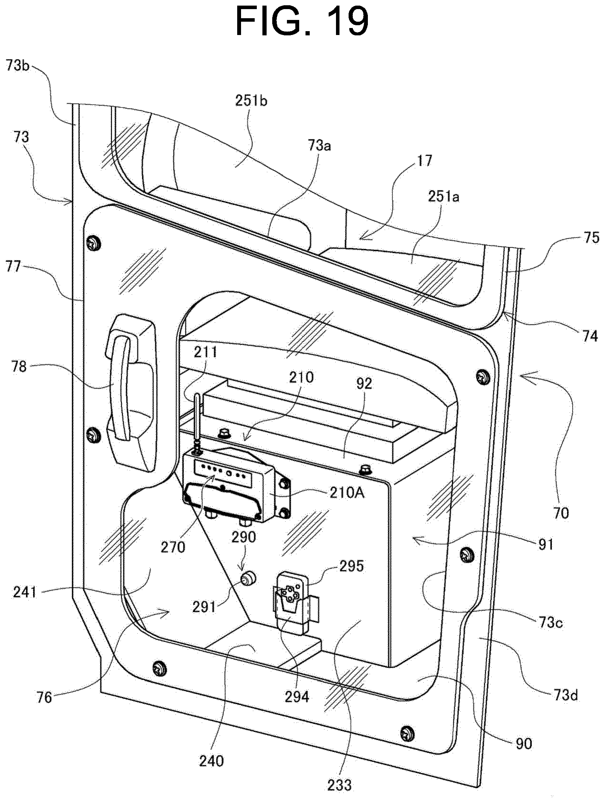

As illustrated in FIGS. 5 and 19, in the configuration in which the cabin 16 has the door 70 on the right side surface portion thereof, the correction information terminal 210 is installed such that an operation state of the correction information terminal 210 displayed in the display 270 is viewable from the outside of the cabin 16 via the door 70 in a closed state. Specifically, as described above, according to the configuration in which the correction information terminal 210 is attached to the right side surface portion 233 of the driver's seat support portion 91 so as to face rightward (front surface portion 261 corresponds to right side), the display 270 is viewable from the outside of the cabin 16 through the door 70 having the transparent portion in a state in which the door 70 is closed.

According to the arrangement configuration of the correction information terminal 210 of this embodiment, even when the door 70 is closed, the display 270 of the correction information terminal 210 can be easily seen from the outside of the cabin 16 mainly through the lower right window portion 76 which is the transparent portion constituting the lower half portion of the door 70. In particular, as illustrated in FIG. 19, from a slightly front right oblique viewpoint of the cabin 16, the entire correction information terminal 210 including the display 270 can be seen via the lower right window portion 76 of the door 70.

Furthermore, the combine harvester 1 includes a reset switch 290 serving as a reset operation portion for resetting a state of the correction information terminal 210 as a component associated with the correction information terminal 210 (refer to FIG. 12). The reset switch 290 is an operation portion for resetting positioning correction information acquired and held by the correction information terminal 210 so as to initialize the correction information terminal 210, for example. The reset switch 290 is used, for example, at a time of an initial setting of the correction information terminal 210 for acquiring information from the base station 300 or for solving a problem in a connection state.

As illustrated in FIGS. 13, 14, and 19, the reset switch 290 has a pressing operation tool 291 to be pressed and is configured as a pressing operation portion, such as a push button. The pressing operation tool 291 is configured by a substantially tubular member.

The reset switch 290 is disposed in the driver's seat support portion 91 in the cabin 16 together with the correction information terminal 210. In particular, in this embodiment, the reset switch 290 is disposed on the right side surface portion 233 in which the correction information terminal 210 is disposed in the driver's seat support portion 91. In the reset switch 290, the pressing operation tool 291 protrudes rightward from the right side surface 233a of the right side surface portion 233. Note that the reset operation portion is not limited to the reset switch 290 according to this embodiment, and may be another switch, such as a slide switch. The reset operation portion may be disposed on the housing 260 of the correction information terminal 210. In this case, for example, a function as the reset operation portion may be assigned to the operation button 273 disposed on the display 270.

The reset switch 290 is disposed below the correction information terminal 210 in the up-down direction. As illustrated in FIG. 14, the reset switch 290 is disposed below the correction information terminal 210. Specifically, the reset switch 290 is disposed on a rear side relative to the center position B0 in the front-rear direction in the lower portion of the right side surface portion 233, and disposed in a portion on a lower rear side of the right side surface portion 233 which is in the vicinity of the inclined surface portion 241.

Furthermore, as illustrated in FIG. 13 and so on, a remote controller holder 294 for holding an auger remote controller 295 for operating the grain discharge conveyor 13 (refer to FIG. 1) that is a discharge auger is disposed on the right side surface portion 233 of the driver's seat support portion 91. The auger remote controller 295 has a substantially rectangular plate-like outer shape, and is used for remote control of operations of the grain discharge conveyor 13, such as turning in the right-left direction, vertical rotation, and grain discharge.

The remote controller holder 294 is disposed in a position in the vicinity of a lower end portion of the right side surface portion 233 in the up-down direction and in a substantially center position in the front-rear direction on the right side surface portion 233 of the driver's seat support portion 91. The remote controller holder 294 is disposed in the vicinity of a front side of the reset switch 290.

The remote controller holder 294 is disposed by fixing a curved plate member having a substantially hut shape in a plan view by welding or the like to the right side surface portion 233. The remote controller holder 294 forms a holding space penetrating in the up-down direction together with the right side surface 233a of the right side surface portion 233. The remote controller holder 294 holds the auger remote controller 295 with respect to the right side surface portion 233 by inserting the auger remote controller 295 into the holding space in a direction in which the longitudinal direction is the up-down direction.

For example, a lower end of the auger remote controller 295 held by the remote controller holder 294 is supported by the horizontal surface portion 240.

According to the combine harvester 1 of this embodiment having the configuration described above, since the layout configuration in which the correction information terminal 210 that receives correction information for correcting positional information received by the antenna unit 80 is disposed on the steering section 15 is employed, an operator who manipulates the combine harvester 1 can easily recognize an operation state of the correction information terminal 210 including a reception state of the correction information.

The combine harvester 1 according to this embodiment includes the cabin 16 covering the steering section 15, and the correction information terminal 210 is disposed in a predetermined location in the cabin 16. According to this configuration, for example, an operator in the cabin 16, such as an operator who is operating the combine harvester 1, can easily grasp an operation state of the correction information terminal 210.

Furthermore, the correction information terminal 210 is disposed such that display of an operation state by the display 270 is viewable from the outside of the cabin 16. According to this configuration, an operator who is outside the cabin 16, such as an operator who got out once from the cabin 16 after starter switch is turned on, can recognize an operation state of the correction information terminal 210 in the cabin 16, and therefore, high usability may be attained.

Furthermore, the correction information terminal 210 is disposed such that display of an operation state by the display 270 is viewable from the outside of the cabin 16 through the lower right window portion 76 of the door 70 in a closed state. With this configuration, an operator who is outside the cabin 16 can easily recognize an operation state of the correction information terminal 210 in the cabin 16 without performing an operation of opening the door 70, and therefore, high usability is attained.

Moreover, the correction information terminal 210 is disposed below the driver's seat 17 in the steering section 15. With this configuration, it is possible to prevent the correction information terminal 210 disposed in the steering section 15 from interfering with an operation for performing various operations of the operator in the steering section 15, a getting-in/out operation of the operator with respect to the driver's seat 17, or the like. Accordingly, excellent workability of the steering section 15 is ensured. In addition, since the correction information terminal 210 can be arranged at a relatively lower position, display of the display 270 can be easily checked.

In particular, in this embodiment, the correction information terminal 210 is disposed in the right side surface portion 233 which is the side surface portion on the door 70 side in the driver's seat support portion 91 as a position lower than the driver's seat 17. With this configuration, the excellent viewability of the display 270 of the correction information terminal 210 from the outside of the cabin 16 can be attained, the space 250 in the cabin 16 can be efficiently used, and furthermore, interference of the correction information terminal 210 with the operator can be efficiently avoided.

Furthermore, the correction information terminal 210 is disposed in the rear portion of the right side surface portion 233 of the driver's seat support portion 91. With this configuration, in the steering section 15, the correction information terminal 210 can be efficiently disposed far from a movement range of movements for performing various operations of the operator and a getting-in/out movement of the operator with respect to the driver's seat 17, or the like. Accordingly, excellent workability of the steering section 15 is ensured.

Furthermore, according to the configuration in which the correction information terminal 210 is disposed on the right side surface portion 233, the front surface portion 232, and the like constituting the driver's seat support portion 91, the interior space of the driver's seat support portion 91 may be used as a wiring arrangement space for the cable extending from the correction information terminal 210 and the like. As a result, the space around the driver's seat 17 can be effectively used, and exposure of the wiring of the electrical components in the steering section 15 can be reduced, so that a region around the driver's seat 17 can be made neat.

Furthermore, according to the configuration in which the correction information terminal 210 is disposed outside the driver's seat support portion 91, that is, on the right side surface portion 233 and the front surface portion 232 of the driver's seat support portion 91, outside the lever column 24, that is, the right side surface portion 24a of the lever column 24, and the like, an operation state of the correction information terminal 210 can be easily recognized when compared with a configuration in which the correction information terminal 210 is disposed in a recess in the cabin 16 or a portion usually covered by a shielding portion, such as a lid, for example.

Furthermore, both the correction information terminal 210 and the reset switch 290 are included in the driver's seat support portion 91. With this configuration, the reset switch 290 may be operated while an operation state displayed in the display 270 of the correction information terminal 210 is checked. Accordingly, settings and the like of the correction information terminal 210 can be easily performed.

In particular, in this embodiment, the correction information terminal 210 and the reset switch 290 are both disposed on the right side surface portion 233 in the driver's seat support portion 91. With this configuration, the correction information terminal 210 and the reset switch 290 may be disposed in the vicinity of each other, and the display 270 can be viewed and the reset switch 290 can be operated from the same direction. Accordingly, the reset switch 290 may be operated while an operation state of the correction information terminal 210 displayed in the display 270 is checked, that is, the excellent workability can be attained. In this point, the same operation effects can be attained also in the configuration in which the operation button 273 disposed in the display 270 is used as a reset operation portion.

Furthermore, the reset switch 290 is disposed lower than the correction information terminal 210. With this configuration, the reset switch 290 which is less frequently operated or checked than the correction information terminal 210 may be disposed in a location where it is difficult for the operator to access or operate. Accordingly, the reset switch 290 is prevented from being unwillingly operated and a normal operation state of the correction information terminal 210 can be ensured.

The above-described embodiment is one example of the present invention, and the present invention is not limited to the above-described embodiment. Therefore, it is needless to say that various modifications can be made even to those other than the above-described embodiment according to the design and the like within the scope that does not depart from the technical idea of the present invention. The effects described in the present disclosure are merely illustrative and are not limited, and other effects may also be exerted.

Although the combine harvester 1 includes the antenna unit 80 configured as a positioning unit that receives electric waves from a positioning satellite in the foregoing embodiment, as a configuration for position measurement, a device using a quantum compass for performing position measurement by measuring earth magnetism or the like without using electric waves transmitted from a positioning satellite may be employed in addition to or instead of the antenna unit 80.

The present technique may have the following configurations. Note that the configurations described below may be selected, omitted, and arbitrary combined.
(1) A work vehicle including a device that receives positional information in a work site, comprising:
   a correction information device that receives correction information for correcting the positional information from a base station located outside the work site; and
   a steering section for steering the vehicle, wherein
   the correction information device displays an operation state of the correction information device and is disposed in the steering section.
(2) The work vehicle according to (1), further comprising:
   a cabin that covers the steering section, wherein
   the correction information device is disposed inside the cabin.
(3) The work vehicle according to (2), wherein
   the correction information device is disposed such that display of the operation state is viewable from an outside of the cabin.
(4) The work vehicle according to (2) or (3), wherein
   the cabin has an open/close door for getting in and getting out the steering section, and
   the correction information device is disposed such that the operation state is viewable from an outside of the cabin through the open/close door in a closed state.
(5) The work vehicle according to any one of (1) to (4), wherein
   a driver's seat is disposed in the steering section, and
   the correction information device is disposed below the driver's seat.
(6) The work vehicle according to (5), further comprising:
   a reset operation portion for resetting a state of the correction information device, wherein
   the correction information device is disposed in a driver's seat support portion that supports the driver's seat, and
   the reset operation portion is disposed in the driver's seat support portion.
(7) The work vehicle according to (6), wherein
   the reset operation portion is disposed below the correction information device.

### REFERENCE SIGNS LIST

1 Combine harvester (work vehicle)
15 Steering section
16 Cabin
17 Driver's seat
70 Door (open/close door)
76 Lower right window portion
80 Antenna unit
81 Receiving device
82 Inertial navigation device
83 Wireless communication device
91 Driver's seat support portion
200 Controller
210 Correction information terminal (correction information device)
210A Device main body
211 Antenna
233 Right side surface portion
270 Display
290 Reset switch (reset operation portion)
300 Base station

## Claims

1. A work vehicle including a device that receives positional information in a work site, comprising:
a correction information device that receives correction information for correcting the positional information from a base station located outside the work site; and
a steering section for steering the vehicle, wherein
the correction information device displays an operation state of the correction information device and is disposed in the steering section.

2. The work vehicle according to claim 1, further comprising:
a cabin that covers the steering section, wherein
the correction information device is disposed inside the cabin.

3. The work vehicle according to claim 2, wherein
the correction information device is disposed such that display of the operation state is viewable from an outside of the cabin.

4. The work vehicle according to claim 2 or 3, wherein
the cabin has an open/close door for getting in and getting out the steering section, and
the correction information device is disposed such that the operation state is viewable from an outside of the cabin through the open/close door in a closed state.

5. The work vehicle according to claim 1, wherein
a driver's seat is disposed in the steering section, and
the correction information device is disposed below the driver's seat.

6. The work vehicle according to claim 5, further comprising:
a reset operation portion for resetting a state of the correction information device, wherein
the correction information device is disposed in a driver's seat support portion that supports the driver's seat, and
the reset operation portion is disposed in the driver's seat support portion.

7. The work vehicle according to claim 6, wherein
the reset operation portion is disposed below the correction information device.

8. The work vehicle according to claim 1, wherein
the display performs display associated with an operation state of the correction information terminal by a light emitting mode of a light emitter.

9. The work vehicle according to claim 8, wherein
the light emitter performs display associated with an operation state of the correction information terminal by light emission in a plurality of light emission colors.

10. The work vehicle according to claim 9, wherein
the display includes a plurality of light emitters arranged in a horizontal line at a predetermined interval.
